# EUROPEAN PATENT APPLICATION

(11) **EP 4 568 319 A1**
(43) Date of publication of application: **11.06.2025**
(21) Application number: 23849290.4
(22) Date of filing: 28.07.2023
(51) Int. Cl.: H04W 24/02

(54) **MODEL UPDATING METHOD AND APPARATUS, COMMUNICATION DEVICE, AND READABLE STORAGE MEDIUM**

(30) Priority: 01.08.2022 CN 202210917378
(71) Applicant: Vivo Mobile Communication Co., Ltd., Dongguan, Guangdong 523863 (CN)
(72) Inventor: WU, Hao, Dongguan, Guangdong 523863 (CN); XIE, Tian, Dongguan, Guangdong 523863 (CN); SUN, Peng, Dongguan, Guangdong 523863 (CN); YANG, Ang, Dongguan, Guangdong 523863 (CN)
(74) Representative: Winter, Brandl - Partnerschaft mbB
(86) International application number: PCT/CN2023/109774
(87) International publication number: WO 2024/027582

(57) **Abstract**

This application discloses a model updating method and apparatus, a communication device, and a readable storage medium. The method includes: a first device transmits first information and/or second information to a second device, where the first information and/or the second information is used to update a first model on the second device side and/or update a second model on the first device side; and the first device receives third information from the second device, where the third information is used to indicate that the first model is successfully updated or the first model fails to be updated.

## Description

### CROSS-REFERENCE TO RELATED APPLICATIONS

This application claims priority to Chinese Patent Application No. 202210917378.2 filed in China on August 1, 2022, which is incorporated herein by reference in its entirely.

### TECHNICAL FIELD

This application belongs to the technical field of communication, and in particular, relates to a model updating method and apparatus, a communication device, and a readable storage medium.

### BACKGROUND

When artificial intelligence (AI)/machine learning (ML) is used to enhance performance of a wireless mobile communication system, a situation that a base station and a terminal use paired AI/ML models to perform joint reasoning to enhance the performance occurs. For example, for a use case of enhancing channel state information (CSI) feedback performance by using AI, an AI model needs to be deployed on both a base station side and a terminal side. The AI model (alternatively referred to as an encoder) on the terminal side compresses the CSI, and feeds back the compressed CSI to the base station. The AI model (alternatively referred to as a decoder) on the base station side restores the compressed CSI, and performs further operations such as scheduling and precoding by using the restored CSI.

When the AI models at two ends are used to perform joint reasoning work, the AI models on the two sides need to be trained by using training data to enable the AI models at the two ends work normally. In a conventional art, the AI models on the two sides need to be jointly designed and trained. That is, the two AI models at the two ends are paired models that are jointly designed, and are jointly trained on a same execution body. However, in an actual working scenario, due to limitations of problems such as generalization, a particular AI model can obtain relatively high performance in a particular scenario or channel environment. As another channel environment changes such as the terminal (for example, user equipment (UE)) moves, the base station and the terminal need to update the AI models at different moments, so as to adapt to a change of the channel environment. While ensuring privacy of models of different manufacturers, model implementation details usually cannot be exposed between different manufacturers. Therefore, model updating cannot be performed on the AI models that are j ointly trained.

### SUMMARY

Embodiments of this application provide a model updating method and apparatus, a communication device, and a readable storage medium to solve a problem about how to update a model.

According to a first aspect, a model updating method is provided, including:
transmitting, by a first device, first information and/or second information to a second device, where the first information and/or the second information is used to update a first model on the second device side and/or update a second model on the first device side; and
receiving, by the first device, third information from the second device, where the third information is used to indicate that the first model is successfully updated or the first model fails to be updated.

According to a second aspect, a model updating method is provided, including:
receiving, by a second device, first information and/or second information, where the first information and/or the second information is used to update a first model on the second device side and/or update a second model on a first device side; and
transmitting, by the second device, third information, where the third information is used to indicate that the first model is successfully updated or the first model fails to be updated.

According to a third aspect, a model updating method is provided, including:
receiving, by a third device, fourth information, where the fourth information includes one or more parameters used to generate first information and/or second information; and
transmitting, by the third device, the first information and/or the second information, where the first information and/or the second information is used to update a first model on a second device side and/or update a second model on a first device side.

According to a fourth aspect, a model updating apparatus is provided, including:
a first transmitting module, configured to transmit first information and/or second information to a second device, where the first information and/or the second information is used to update a first model on the second device side and/or update a second model on a first device side; and
a first receiving module, configured to receive third information from the second device, where the third information is used to indicate that the first model is successfully updated or the first model fails to be updated.

According to a fifth aspect, a model updating apparatus is provided, including:
a fourth receiving module, configured to receive first information and/or second information, where the first information and/or the second information is used to update a first model on a second device side and/or update a second model on a first device side; and
a sixth transmitting module, configured to transmit third information, where the third information is used to indicate that the first model is successfully updated or the first model fails to be updated.

According to a sixth aspect, a model updating apparatus is provided, including:
an eighth receiving module, configured to receive fourth information, where the fourth information includes one or more parameters used to generate first information and/or second information; and
an eighth transmitting module, configured to transmit the first information and/or the second information, where the first information and/or the second information is used to update a first model on a second device side and/or update a second model on a first device side.

According to a seventh aspect, a communication device is provided, including: a processor, a memory, and a program or an instruction stored on the memory and executable on the processor, where the steps of the method according to the first aspect, the second aspect, or the third aspect are implemented when the program or the instruction is executed by the processor.

In an eighth aspect, a readable storage medium is provided, having a program or an instruction stored therein, where the steps of the method according to the first aspect, the second aspect, or the third aspect are implemented when the program or the instruction is executed by a processor.

According to a ninth aspect, a chip is provided, including a processor and a communication interface, where the communication interface is coupled to the processor, and the processor is configured to run a program or an instruction to implement the steps of the method according to the first aspect, the second aspect, or the third aspect.

According to a tenth aspect, a computer program/a program product is provided. The computer program/the program product is stored in a non-transient storage medium, and the computer program/the program product is executed by at least one processor to implement the steps of the method according to the first aspect, the second aspect, or the third aspect.

According to an eleventh aspect, a communication system is provided. The communication system includes a terminal and a network device. The terminal is configured to implement the steps of the method according to the first aspect, and the network device is configured to implement the steps of the method according to the second aspect or the third aspect.

In embodiments of this application, the first device may transmit the first information and/or the second information to the second device, where the first information and/or the second information may be used to update a second device side model and/or a first device side model to independently update the first device side model and the second device side model. In this way, while ensuring privacy of models of different device manufacturers, the first device side model and/or the second device side model may be updated to adapt to requirements of different communication scenarios, thereby improving user experience.

### BRIEF DESCRIPTION OF THE DRAWINGS

FIG. 1 is a schematic architectural diagram of a wireless communication system according to an embodiment of the present disclosure;
FIG. 2 is a flowchart 1 of a model updating method according to an embodiment of this application;
FIG. 3 is a flowchart 2 of a model updating method according to an embodiment of this application;
FIG. 4 is a flowchart 3 of a model updating method according to an embodiment of this application;
FIG. 5 is a flowchart 4 of a model updating method according to an embodiment of this application;
FIG. 6 is a flowchart 5 of a model updating method according to an embodiment of this application;
FIG. 7 is a flowchart 6 of a model updating method according to an embodiment of this application;
FIG. 8 is a flowchart 7 of a model updating method according to an embodiment of this application;
FIG. 9 is a schematic diagram 1 of a model updating apparatus according to an embodiment of this application;
FIG. 10 is a schematic diagram 2 of a model updating apparatus according to an embodiment of this application;
FIG. 11 is a schematic diagram 3 of a model updating apparatus according to an embodiment of this application;
FIG. 12 is a schematic diagram of a terminal according to an embodiment of this application;
FIG. 13 is a schematic diagram of a network device according to an embodiment of this application; and
FIG. 14 is a schematic diagram of a communication device according to an embodiment of this application.

### DETAILED DESCRIPTION

Technical solutions in embodiments of this application are clearly described below with reference to accompanying drawings in the embodiments of this application. Apparently, the described embodiments are part rather than all embodiments of this application. Based on the embodiments of this application, all other embodiments obtained by those of ordinary skill in the art fall within the scope of protection of this application.

Terms "first", "second", and the like in specification and claims of this application are used to distinguish similar objects instead of describing a specific order or sequence. It is to be understood that the terms used in this way are exchangeable in a proper case, so that the embodiments of this application can be implemented in a sequence other than sequences graphically shown or described here, and objects distinguished by "first" and "second" are usually of the same class without limiting a number of the objects, for example, a first object may be one or may be multiple. In addition, "and/or" in the specification and the claims represents at least one of the connected objects, and character "/" generally represents that contextual objects are in an "or" relationship.

It is worth noting that technologies described in this application are not limited to a new ratio (New Ratio, NR) system, or a long term evolution (Long Term Evolution, LTE)/evolution (LTE-Advanced, LTE-A) system of the LTE, and may alternatively be used for other wireless communication systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, and a single-carrier frequency division multiple access (Single-carrier Frequency Division Multiple Access, SC-FDMA) system, and other systems. The terms "system" and "network" in the embodiments of this application are often used interchangeably, and the described technology may be applied to the systems and radio technologies mentioned above, and may alternatively be applied to other systems and radio technologies. The following description describes an NR system for a purpose of giving examples, and the term NR is used in most of the following descriptions. However, these technologies may alternatively be applied to applications other than an NR system application, for example, a 6th generation (6th Generation, 6G) communication system.

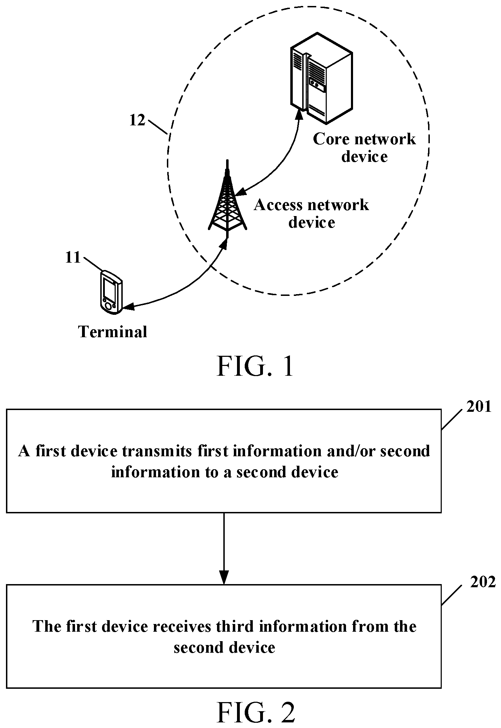

FIG. 1 is a block diagram of a wireless communication system applicable to the embodiments of this application. The wireless communication system includes a terminal 11 and a network side device 12.

The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palm computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), a smart home device (a home device with a wireless communication function, such as a refrigerator, a television, a washing machine, or furniture), a game console, a personal computer (personal computer, PC), an automatic teller machine, or a self-service machine. The wearable device includes: a smart watch, a smart bracelet, a smart headphone, smart glasses, smart jewelry (a smart bracelet, a smart chain bracelet, a smart ring, a smart necklace, a smart anklet, a smart ankle chain, and the like), a smart wristband, smart clothing, and the like. In addition to the foregoing terminal devices, the terminal involved in this application may alternatively be a chip in a terminal, for example, a modem (Modem) chip or a system on chip (System on Chip, SoC). It is to be noted that, a specific type of the terminal is not limited in the embodiments of this application.

The network device 12 may include an access network device or a core network device. The access network device may alternatively be referred to as a Radio Access Network device, a radio access network (Radio Access Network, RAN), a radio access network function, or a radio access network unit. The access network device may include a base station, a wireless local area network (Wireless Local Area Network, WLAN) access point or a WiFi node, and the like. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolved B node, a transmitting receiving point (Transmitting Receiving Point, TRP), or a suitable term in the field. As long as achieving the same technical effects, the base station is not limited to a specific technical word. It is to be noted that, in the embodiments of this application, only the base station in an NR system is taken as an example for introducing, and a specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), and a Centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It is to be noted that, in the embodiments of this application, only the core network device in an NR system is taken as an example for introducing, and a specific type of the core network device is not limited.

With reference to the accompanying drawings, the following describes a model updating method and apparatus, a communication device, and a readable storage medium according to the embodiments of this application in detail through some embodiments and application scenarios thereof.

Referring to FIG. 2, this embodiment of this application provides a model updating method, applied to a third device, specifically including the following steps: step 201 and step 202.

Step 201: A first device transmits first information and/or second information to a second device. The first information and/or the second information is used to update a first model on the second device side and/or update a second model on the first device side.

Optionally, an update mode includes training, model management, life cycle management, and the like.

Optionally, the first model on the second device side may alternatively be described as a second device side model, and the second model on the first device side may alternatively be described as a first device side model. In a specific example, the foregoing first model and second model may be corresponding or associated. For example, the first device may transmit information to the second device through the second model, and the second device may process received information according to the first model.

For example, in a case that the first information and/or the second information is used to update the first model on the second device side, the second device may directly update the first model on the second device side according to the received first information and/or second information. In a case that the first information and/or the second information is used to update the second model on the first device side, the second device may obtain, according to the first information and/or the second information, data and/or a label used to update the first model on the second device side, and update the first model on the second device side according to the data and/or the label.

The first model and the second model may be AI models. For example, the first model may be an AI model for restoring compressed CSI, for example, a decoder. The second model may be an AI model for compressing the CSI, for example, an encoder.

For example, AI models are deployed on both the first device side and the second device side. The AI models of the first device side and the second device side may be independently (or separately) updated and j ointly reasoned. In a case that the first device moves or a channel environment changes, the first device may transmit the first information and/or the second information to the second device.

Step 202: The first device receives third information from the second device. The third information is used to indicate that the first model is successfully updated or the first model fails to be updated.

In this way, the first device may determine, according to the third information, whether an updated second model can be used. The second model is a model corresponding to the first model.

In an implementation of this application, the method further includes:
the first device processes channel state information (Channel, State Information, CSI) according to the second model in a case that the third information indicates that the first model is successfully updated.

For example, the first device may report the CSI according to the updated second model (for example, an encoder), and the second device may receive the CSI according to the updated first model (for example, a decoder).

**In** another implementation of this application, the method further includes:
the first device processes the CSI according to a preset codebook in a case that the third information indicates that the first model fails to be updated.

For example, the first device may report the CSI according to the preset codebook, and the second device may receive the CSI according to the preset codebook.

In an implementation of this application, the method further includes:
the first device receives fourth information. The fourth information includes one or more parameters used to generate the first information and/or the second information.

The fourth information may alternatively be referred to as a configuration parameter list.

That is, the first device may generate the first information and/or the second information according to information configured by another device. For example, the first device may receive the fourth information from the second device.

In an implementation of this application, the fourth information may be at least one of the following:
(1) high-layer configuration information of a radio access network (Radio Access Network, RAN);
(2) core network information;
(3) terminal capability information; and
(4) terminal auxiliary information.

Optionally, the terminal capability information or the terminal auxiliary information may include at least one of the following: (a) a data requirement or capability (for example, a data volume, a data structure, a number of data sets, a number of batches, a number of iterations, or a number of epochs); (b) a label requirement or capability (for example, a number of labels, and an association relationship between the labels and data); an association relationship between the first information and the second information; and (d) a channel characteristic parameter (for example, a channel large-scale parameter).

In an implementation of this application, the fourth information is used to trigger to update the first model and/or the second model.

That is, the first device may perform step 201 in a case that the first device receives the fourth information.

In an implementation of this application, the fourth information includes information indicating one or more of the following parameters:
(1) a parameter of the first information and/or the second information;
(2) a CSI feedback parameter;
   optionally, the CSI feedback parameter includes at least one of a CSI compression rate, a CSI load, and a CSI quantization method;
(3) an antenna port parameter;
   optionally, the antenna port parameter may include at least one of a number of ports and a number of reference signal resources;
(4) a time domain parameter;
   optionally, the time domain parameter may include a time window in which the first information or the second information is transmitted, and the like;
(5) a frequency domain parameter;
   optionally, the frequency domain parameter may include a sub-band parameter, and the like;
(6) a channel measurement parameter;
   optionally, the channel measurement parameter may include a parameter of a reference signal used to measure a channel characteristic; and
(7) a channel characteristic parameter.

In an implementation of this application, the parameter of the first information and/ the parameter of the second information may include one or more of the following:
(1) a data size of the first information and/or the second information;
(2) a data structure of the first information and/or the second information;
   optionally, the data structure may include one or more of the following: (a) each piece of first information and each piece of second information are in one-to-one correspondence; (b) the first information includes a plurality of information groups, and each information group is an update batch, or the plurality of information groups form an update iteration, or the plurality of information groups form an update epoch; and (c) each information group in the first information is associated with one piece of second information;
(3) a number of labels in the first information and/or a number of labels in the second information;
(4) an association relationship between the first information and the second information; and
(5) a compression parameter of the first information and/or the second information.

Optionally, the compression parameter includes one or more of the following: (a) a compression rate; (b) a parameter indicating joint compression of the first information and the second information; and (c) a parameter indicating separate compression of the first information and compression of the second information.

In an implementation of this application, the method further includes: the first device transmits the fourth information to a third device.

Optionally, the third device is a network node for model calculation (for example, model updating or model training), for example, at least one of an over the top (over the top, OTT) server or an operations, administration and maintenance (operations, administration and maintenance, OAM) server.

In an implementation of this application, the method further includes:
the first device receives, from a third device, at least one of the following: (1) the first information and/or the second information, (2) a parameter of the first model and/or the second model, and (3) a model identifier associated with the first model and/or the second model.

That is, the first device may receive, from the third device, data or a parameter used to perform model updating, and may associate a model identifier with an updated model through the third device. In this way, a corresponding model may be updated, activated, or deactivated through the model identifier subsequently.

In an implementation of this application, the method further includes:
the first device transmits a channel measurement report to a third device.

The channel measurement report may be for a model update. For example, the third device generates the first information and/or the second information according to the channel measurement report.

In an implementation of this application, the method further includes:
the first device releases a configuration of the one or more parameters in the fourth information in a case that the first device receives the third information from the second device.

In an implementation of this application, the method further includes:
the first device transmits a first message. The first message is used to request to update the first model and/or the second model.

The first message may alternatively be referred to as a model update request message.

In an implementation of this application, that the first device transmits a first message includes:
the first device transmits the first message in a case that the first device performs model performance monitoring.

In an implementation of this application, the first message carries a model identifier associated with the first model and/or the second model.

That is, in the step of transmitting the model update request message, the first device may transmit the model identifier associated with the first model and/or the second model to the second device to associate the model identifier with an updated model.

In an implementation of this application, that a first device transmits first information and/or second information to a second device includes:
the first device transmits the first information and/or the second information, and a model identifier associated with the first model and/or the second model to the second device.

That is, in the step of transmitting the first information and/or the second information, the first device may transmit the model identifier associated with the first model and/or the second model to the second device.

In an implementation of this application, the method further includes:
after receiving the third information, the first device transmits a model identifier associated with the first model to the second device.

In an implementation of this application, the third information includes a model identifier associated with the first model and an identifier of update success, or, the third information includes a model identifier associated with the first model.

In an implementation of this application, the method further includes:
the first device transmits fifth information. The fifth information is used to indicate that one or more model identifiers are invalid.

It may be understood that if a model identifier corresponding to a model is invalid, the model may not need to be continuously stored.

In an implementation of this application, the model identifier includes at least one of the following:
(1) an index associated with a parameter indicated by the fourth information;
   that is, a corresponding model may be selected, activated, or deactivated based on the index associated with the parameter indicated by the fourth information; and
(2) an index associated with the first information and/or the second information.

That is, a corresponding model may be selected, activated, or deactivated based on the index associated with the first information and/or the second information.

In an implementation of this application, the first information includes data and/or a label used to represent input of the second model on the first device side or the first model on the second device side;
and/or,
the second information includes data and/or a label used to represent output of the second model on the first device side or the first model on the second device side.

In an implementation of this application, the first device is a terminal, and the second device is a base station (that is, an access network device).

In another implementation of this application, the first device is a base station, and the second device is a terminal.

In embodiments of this application, the first device may transmit the first information and/or the second information to the second device, where the first information and/or the second information may be used to update a second device side model and/or a first device side model to independently update the first device side model and the second device side model. In this way, while ensuring privacy of models of different device manufacturers, the first device side model and/or the second device side model may be updated to adapt to requirements of different communication scenarios, thereby improving user experience.

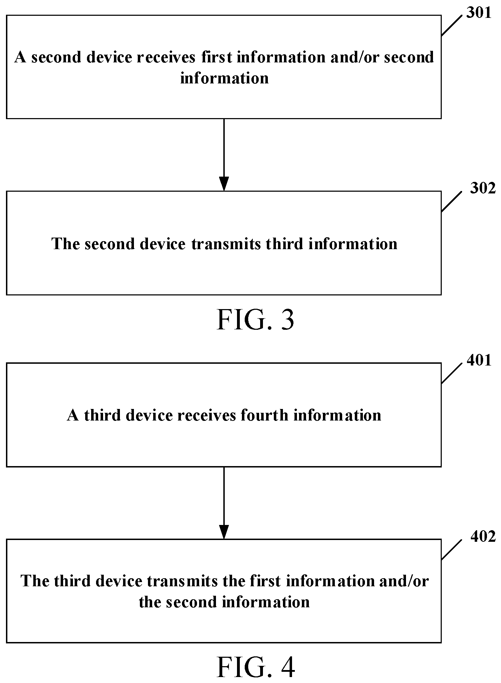

Referring to FIG. 3, this embodiment of this application provides a model updating method, applied to a second device, specifically including the following steps: step 301 and step 302.

Step 301: A second device receives first information and/or second information. The first information and/or the second information is used to update a first model on the second device side and/or update a second model on a first device side.

Step 302: The second device transmits third information. The third information is used to indicate that the first model is successfully updated or the first model fails to be updated.

In this way, if the first model on the second device side is successfully updated, the second device may use the first model and notify, through the third information, the first device to use the second model corresponding to an updated first model. If the first update on the second device side fails to be updated, the second device continues to use the previous first model, and notifies, through the third information, the first device to use the second model corresponding to the previous first model.

In an implementation of this application, the method further includes:
the second device processes CSI according to the first model in a case that the third information indicates that the first model is successfully updated.

For example, the second device may receive the CSI according to the updated first model (for example, a decoder) in a case that the third information indicates that the first model (for example, the decoder) is successfully updated.

In another implementation of this application, the method further includes:
the second device processes the CSI according to a preset codebook in a case that the third information indicates that the first model fails to be updated.

For example, the first device may report the CSI according to the preset codebook, and the second device may receive the CSI according to the preset codebook.

In an implementation of this application, the method further includes:
the second device transmits fourth information. The fourth information includes one or more parameters used to generate the first information and/or the second information.

For example, the second device may transmit the fourth information to the first device.

In an implementation of this application, the fourth information is at least one of the following:
(1) RAN high-layer configuration information;
(2) core network information;
(3) terminal capability information; and
(4) terminal auxiliary information.

In an implementation of this application, the fourth information is used to trigger to update the first model and/or the second model.

That is, the second device may perform step 301 of updating the first model in a case that the second device transmits the fourth information.

In an implementation of this application, the fourth information may include information indicating one or more of the following parameters:
(1) a parameter of the first information and/or the second information;
(2) a CSI feedback parameter;
   optionally, the CSI feedback parameter includes at least one of a CSI compression rate, a CSI load, and a CSI quantization method;
(3) an antenna port parameter;
   optionally, the antenna port parameter includes at least one of a number of ports and a number of reference signal resources;
(4) a time domain parameter;
(5) a frequency domain parameter;
(6) a channel measurement parameter; and
(7) a channel characteristic parameter.

In an implementation of this application, the parameter of the first information and/ the parameter of the second information includes one or more of the following:
(1) a data size of the first information and/or the second information;
   optionally, the data structure includes one or more of the following: (a) each piece of first information and each piece of second information are in one-to-one correspondence; (b) the first information includes a plurality of information groups, and each information group is an update batch, or the plurality of information groups form an update iteration, or the plurality of information groups form an update epoch; and (c) each information group in the first information is associated with one piece of second information;
(2) a data structure of the first information and/or the second information;
(3) a number of labels in the first information and/or a number of labels in the second information;
(4) an association relationship between the first information and the second information; and
(5) a compression parameter of the first information and/or the second information.

Optionally, the compression parameter includes one or more of the following: (a) a compression rate; (b) a parameter indicating joint compression of the first information and the second information; and (c) a parameter indicating separate compression of the first information and compression of the second information.

In an implementation of this application, the method further includes:
the second device receives a first message. The first message is used to request to update the first model and/or the second model.

In an implementation of this application, the method further includes:
the first message carries a model identifier associated with the first model and/or the second model.

In an implementation of this application, that the second device receives the first information and/or the second information includes:
the second device receives the first information and/or the second information, and a model identifier associated with the first model and/or the second model.

In an implementation of this application, after the second device transmits the third information, the method further includes:
the second device receives a model identifier associated with the first model.

In an implementation of this application, the third information includes a model identifier associated with the first model and an identifier of update success, or, the third information includes a model identifier associated with the first model.

In an implementation of this application, the method further includes:
the second device selects, activates, or deactivates the second model on the first device side according to the model identifier.

In this way, after the model is updated, to avoid repeated update and reduce update overheads and complexity, the second model may be selected, activated, or deactivated according to the model identifier associated with the second model.

In an implementation of this application, the method further includes:
the second device receives fifth information from the first device, and/or, receives sixth information from a third device.

The fifth information or the sixth information is used to indicate that one or more model identifiers are invalid. In this way, the second device may not store a model corresponding to the model identifier that is invalid.

In an implementation of this application, the model identifier includes at least one of the following:
(1) an index associated with a parameter indicated by the fourth information;
   that is, a corresponding model may be selected, activated, or deactivated based on the index associated with the parameter indicated by the fourth information; and
(2) an index associated with the first information and/or the second information.

That is, a corresponding model may be selected, activated, or deactivated based on the index associated with the first information and/or the second information.

In an implementation of this application, the first information includes data and/or a label used to represent input of the second model on the first device side or the first model on the second device side;
and/or,
the second information includes data and/or a label used to represent output of the second model on the first device side or the first model on the second device side.

In an implementation of this application, the second device is a base station, and the first device is a terminal, or, the second device is a terminal, and the first device is a base station.

In an implementation of this application, the third device is a network node for model calculation.

In embodiments of this application, the second device may receive the first information and/or the second information, where the first information and/or the second information may be used to update a second device side model and/or a first device side model to independently update the first device side model and the second device side model. In this way, while ensuring privacy of models of different device manufacturers, the first device side model and/or the second device side model may be updated to adapt to requirements of different communication scenarios, thereby improving user experience.

Referring to FIG. 4, this embodiment of this application provides a model updating method, applied to a terminal, specifically including the following steps: step 401 and step 402.

Step 401: A third device receives fourth information. The fourth information includes one or more parameters used to generate first information and/or second information.

Step 402: The third device transmits the first information and/or the second information. The first information and/or the second information is used to update a first model on a second device side and/or update a second model on a first device side.

In an implementation of this application, the fourth information is at least one of the following:
(1) RAN high-layer configuration information;
(2) core network information;
(3) terminal capability information; and
(4) terminal auxiliary information.

In an implementation of this application, the fourth information is used to trigger to update the first model and/or the second model.

That is, after receiving the fourth information, the third device may trigger the first device to update the second model, and/or trigger the second device to update the first model.

In an implementation of this application, the fourth information may include information indicating one or more of the following parameters:
(1) a parameter of the first information and/or the second information;
(2) a CSI feedback parameter;
   optionally, the CSI feedback parameter includes at least one of a CSI compression rate, a CSI load, and a CSI quantization method;
(3) an antenna port parameter;
   optionally, the antenna port parameter includes at least one of a number of ports and a number of reference signal resources;
(4) a time domain parameter;
(5) a frequency domain parameter;
(6) a channel measurement parameter; and
(7) a channel characteristic parameter.

In an implementation of this application, the parameter of the first information and/ the parameter of the second information includes one or more of the following:
(1) a data size of the first information and/or the second information;
   optionally, the data structure includes one or more of the following: (a) each piece of first information and each piece of second information are in one-to-one correspondence; (b) the first information includes a plurality of information groups, and each information group is an update batch, or the plurality of information groups form an update iteration, or the plurality of information groups form an update epoch; and (c) each information group in the first information is associated with one piece of second information;
(2) a data structure of the first information and/or the second information;
(3) a number of labels in the first information and/or a number of labels in the second information;
(4) an association relationship between the first information and the second information; and
(5) a compression parameter of the first information and/or the second information.

Optionally, the compression parameter includes one or more of the following: (a) a compression rate; (b) a parameter indicating joint compression of the first information and the second information; and (c) a parameter indicating separate compression of the first information and compression of the second information.

In an implementation of this application, that the third device transmits the first information and/or the second information includes:
the third device transmits the first information and/or the second information to the first device and/or the second device.

In an implementation of this application, the method further includes:
the third device transmits a parameter of the first model and/or the second model, and/or, a model identifier associated with the first model and/or the second model to the first device and/or the second device.

In an implementation of this application, the method further includes:
the third device receives a channel measurement report. Optionally, the third device may generate the first information and/or the second information according to the channel measurement report.

In an implementation of this application, the method further includes:
the third device transmits sixth information. The sixth information is used to indicate that the one or more model identifiers are invalid.

In an implementation of this application, the model identifier includes at least one of the following:
(1) an index associated with a parameter indicated by the fourth information;
   that is, a corresponding model may be selected, activated, or deactivated based on the index associated with the parameter indicated by the fourth information; and
(2) an index associated with the first information and/or the second information.

That is, a corresponding model may be selected, activated, or deactivated based on the index associated with the first information and/or the second information.

In an implementation of this application, the first information includes data and/or a label used to represent input of the second model on the first device side or the first model on the second device side;
and/or,
the second information includes data and/or a label used to represent output of the second model on the first device side or the first model on the second device side.

In an implementation of this application, the third device is a network node for model calculation, the first device is a terminal, and the second device is a base station;
or,
the third device is a network node for model calculation, the first device is a base station, and the second device is a terminal.

In this embodiment of this application, the third device may transmit the first information and/or the second information, where the first information and/or the second information may be used to update a second device side model and/or a first device side model, to independently update the first device side model and the second device side model. In this way, while ensuring privacy of models of different device manufacturers, the first device side model and/or the second device side model may be updated to adapt to requirements of different communication scenarios and improve user experience.

For ease of understanding implementations of this application, Embodiment 1 to Embodiment 5 are described below. The following embodiments are described by taking an example in which the first device is a terminal, the second device is a base station, and the third device is an OTT server. It may be understood that the base station and the terminal may alternatively be exchanged, that is, roles of the first device and the second device may be exchanged.

### Embodiment 1

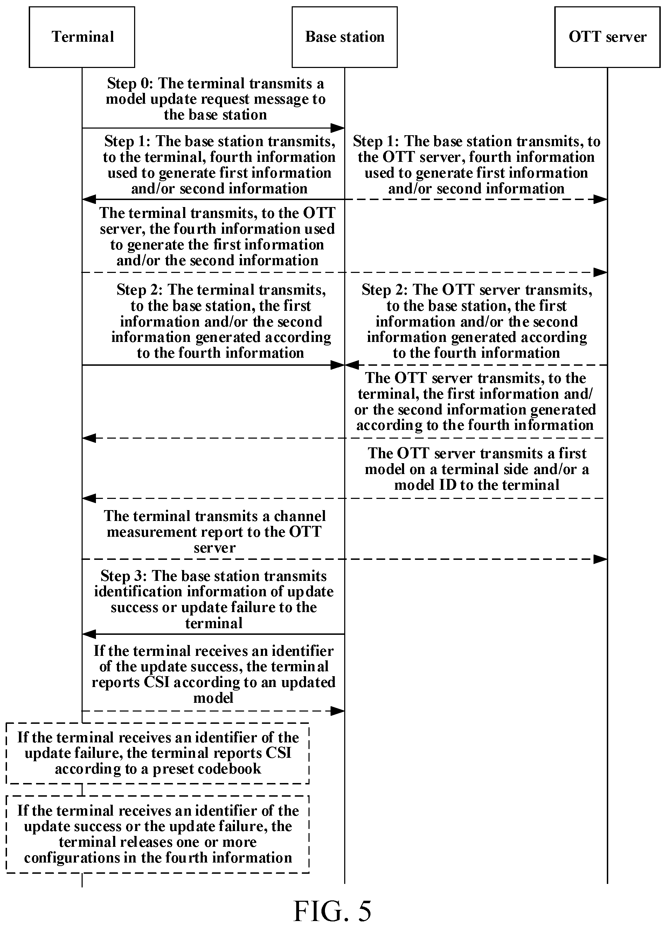

A terminal, a base station, or an OTT server updates a model through at least one of the following steps in FIG. 5.

Step 0: A terminal transmits a model update request message (that is, a first message) to a base station; and the base station receives the model update request message transmitted by the terminal.

Step 1: The base station transmits, to the terminal (or the OTT server), fourth information used to generate first information and/or second information; and the terminal (or the OTT server) receives the fourth information used to generate the first information and/or the second information.

Step 2: The terminal (or the OTT server) transmits the first information and/or the second information generated according to the fourth information to the base station; and the base station receives the first information and/or the second information generated according to the fourth information.

Step 3: The base station transmits, to the terminal, identification information indicating that an AI model on a base station side (for example, a first model on a second device side) is successfully updated or fails to be updated; and the terminal receives the identification information indicating that the AI model on the base station side is successfully updated or fails to be updated transmitted by the base station.

Optionally, the terminal transmits a model update request message in a case that the terminal performs model performance monitoring.

Optionally, the fourth information transmitted by the base station in step 1 is used to trigger an update of the AI model on a terminal side (for example, a second model on a first device side) and/or the AI model on the base station side.

Optionally, the fourth information may include information indicating one or more of the following parameters:
(1) a parameter of the first information and/or the second information;
(2) a CSI feedback parameter;
   optionally, the CSI feedback parameter includes at least one of a CSI compression rate, a CSI load, and a CSI quantization method;
(3) an antenna port parameter;
   optionally, the antenna port parameter may include at least one of a number of ports and a number of reference signal resources;
(4) a time domain parameter;
   optionally, the time domain parameter may include a time window in which the first information or the second information is transmitted, and the like;
(5) a frequency domain parameter;
   optionally, the frequency domain parameter may include a sub-band parameter, and the like;
(6) a channel measurement parameter;
   optionally, the channel measurement parameter may include a parameter of a reference signal used to measure a channel characteristic; and
(7) a channel characteristic parameter.

In an implementation of this application, the parameter of the first information and/ the parameter of the second information may include one or more of the following:
(1) a data size of the first information and/or the second information;
(2) a data structure of the first information and/or the second information;
   optionally, the data structure may include one or more of the following: (a) each piece of first information and each piece of second information are in one-to-one correspondence; (b) the first information includes a plurality of information groups, and each information group is an update batch, or the plurality of information groups form an update iteration, or the plurality of information groups form an update epoch; and (c) each information group in the first information is associated with one piece of second information;
(3) a number of labels in the first information and/or a number of labels in the second information;
(4) an association relationship between the first information and the second information; and
(5) a compression parameter of the first information and/or the second information.

Optionally, the compression parameter includes one or more of the following: (a) a compression rate; (b) a parameter indicating joint compression of the first information and the second information; and (c) a parameter indicating separate compression of the first information and compression of the second information.

Optionally, step 1 may further include that the terminal transmits the fourth information to the OTT server.

Optionally, the first information at least includes: data and/or a label used to represent input of the AI model (for example, an encoder) on the terminal side.

Optionally, the second information at least includes: data and/or a label used to represent output of the AI model (for example, the encoder) on the terminal side.

Optionally, step 2 may include that the OTT server transmits the first information and/or the second information to the terminal.

Optionally, in step 2, the first information and the second information are generated according to a data structure parameter configured in step 1.

Optionally, step 2 may further include that the OTT server transmits the AI model (for example, an encoder) on the terminal side and/or a model ID to the terminal.

Optionally, step 2 may further include that the terminal transmits a channel measurement report to the OTT server.

Optionally, in step 3, if the terminal receives an identifier of the update success, the terminal reports the CSI according to an updated AI model (for example, the encoder) on the terminal side.

Optionally, in step 3, if the terminal receives an identifier of the update failure, the terminal reports the CSI according to a preset codebook.

Optionally, in step 3, after receiving the identifier of update success or failure, the terminal releases a configuration of the one or more parameters in the fourth information in step 1.

Optionally, the base station, the terminal, and/or the OTT server is an updated model identifier (ID) associated with the AI model on the terminal side.
(a) The terminal reports an associated model ID to the base station in step 0 or step 2.
(b) The terminal reports the associated model ID to the base station after receiving the identifier of the update success in step 3.
(c) The OTT server transmits the associated model ID to the base station or the terminal in step 2.
(d) The base station transmits the model ID and an identifier of the update success to the terminal together in step 3, or, transmits the model ID to the terminal in step 3, to identify the update success.

Optionally, the model ID includes at least one of the following: i. an index associated with a parameter indicated by the fourth information in step 1; and ii. an index associated with the first information and/or the second information transmitted in step 2.

Optionally, the base station selects, activates, or deactivates the AI model (for example, an encoder) on the terminal side by using the foregoing model ID.

Optionally, the terminal (or the OTT server) reports that one or more model IDs fail.

Further, the terminal (or the OTT server) can only report that a deactivated (or not used currently) model ID is invalid.

### Embodiment 2

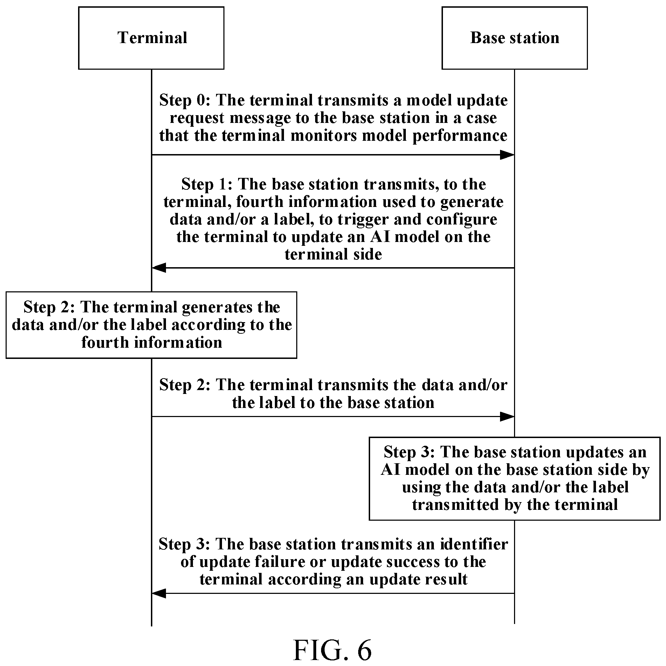

Referring to FIG. 6, specific steps are as follows:
Step 0: The terminal transmits a model update request message (that is, a first message) in a case that the terminal monitors model performance.

Optionally, the model update request message carries a model ID associated with an AI model on a terminal side.

Step 1: The base station transmits, to the terminal, fourth information used to generate data and/or a label (for example, a model label, encoder output, encoder input, or a decoder update label) to trigger and configure the terminal to perform a model update.

The data and/or the label at least includes: the data and/or the label used to represent input of the AI model (for example, an encoder) on the terminal side, or, the data and/or the label used to represent output of the AI model (for example, an encoder) on the terminal side.

The fourth information includes information indicating one or more of the following parameters:
(1) a parameter of the first information and/or the second information;
(2) a CSI feedback parameter;
   optionally, the CSI feedback parameter includes at least one of a CSI compression rate, a CSI load, and a CSI quantization method, where the CSI quantization method refers to how to quantize a compressed CSI coefficient by using a particular number of bits;
(3) an antenna port parameter;
   optionally, the antenna port parameter includes at least one of a number of ports and a number of reference signal resources;
(4) a time domain parameter;
(5) a frequency domain parameter;
(6) a channel measurement parameter; and
(7) a channel characteristic parameter.

Optionally, at least some parameters for model update in step 1 may be the same as parameters of an associated CSI report.

Step 2: The terminal generates, according to the fourth information configured by the base station, data and/or a label used to update a model, and the terminal transmits the data and/or the label to the base station.

For example, the terminal generates, according to the fourth information configured by the base station, the data used to update the AI model on the terminal side, updates the AI model on the terminal side by using the data, and takes output of the obtained AI model on the terminal side as the label. The terminal transmits the data and/or the label to the base station.

Optionally, the data and/or the label described above may be generated according to a particular data structure, for example, generated according to a data structure configured by the base station.

Optionally, the data structure includes at least one of the following:
(1) each piece of data and each label are in one-to-one correspondence;
(2) the data includes a plurality of data sets, each data set is an updated Batch, and the plurality of data sets form an update iteration, or, the plurality of data sets (or a plurality of iterations) form an Epoch; and
(3) the data includes the data sets, and each data set is associated with a label.

Optionally, in step 2, the terminal transmits a model ID associated with the AI model on the terminal side to the base station.

Step 3: The base station updates the AI model on the base station side by using the data and/or the label transmitted by the terminal, and transmits an identifier of update failure or update success to the terminal according to an update result.

Optionally, if the terminal receives the identifier of the update success, the terminal reports the CSI according to the updated AI model on the terminal side.

Optionally, if the terminal receives the identifier of the update failure, the terminal falls back to a predefined type 2 (eType II) CSI reporting configuration to report the CSI.

Optionally, after receiving the identifier of update success or failure, the terminal releases a configuration of the one or more parameters in the fourth information in step 1.

Optionally, the base station transmits the model ID and the identifier of the update success to the terminal together, or, the base station transmits the model ID to the terminal, to identify that the model is successfully updated.

For example, an identifier indicated by the base station is 0, indicating the update failure. An identifier indicated by the base station is greater than or equal to 1, indicating the update success. A specific value indicates the model ID.

Optionally, after receiving the identifier of the update success, the terminal reports an associated model ID to the base station.

It may be understood that the foregoing step 1 to step 3 only represent some operations involved in performing a model update. These operations are not necessary in all cases. Steps that may be omitted include, but are not limited to:
(1) step 0 is not a necessary step in a case that a network side monitors model performance; and
(2) the terminal may automatically generate data for updating a model according to a channel measurement result and/or a parameter configuration used by the base station for CSI feedback. In this case, step 1 is not a necessary step.

It may be understood that numbers of the foregoing steps do not indicate a sequence of these operations, and are merely for ease of distinguishing and describing. A possible example of an execution sequence includes, but is not limited to:
(1) the steps are performed according to the foregoing sequence of step 0, step 1, step 2, and step 3;
(2) step 0 may be performed after step 1 or step 2, that is, the base station first reports a configuration parameter for a possible model update or CSI, and the terminal subsequently performs corresponding data transmission and model update according to a configuration of the base station;
(3) the model update request message in step 0 and the data and/or the label in step 2 are transmitted to the base station together; and
(4) the model update request message in step 0 is performed after step 3, that is, the terminal and the base station first perform the model update, and whether the terminal uses the model may be determined after the update is completed. Further, the model update request message of the terminal is transmitted only for the updated model.

### Embodiment 3

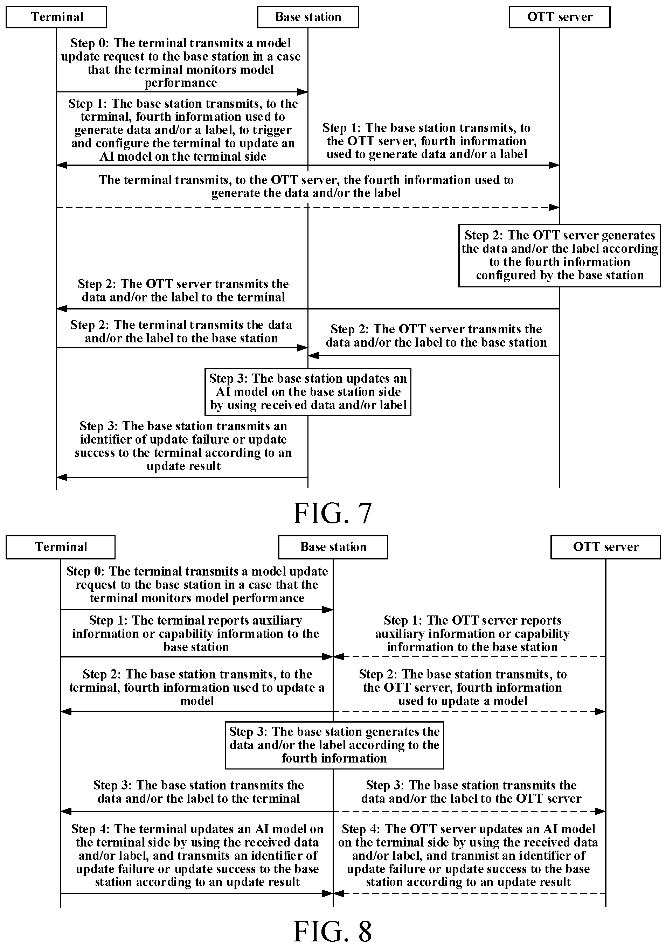

Referring to FIG. 7, specific steps are as follows:
Step 0: The terminal transmits a model update request message (that is, a first message) in a case that the terminal monitors model performance.

Optionally, the model update request message carries a model ID associated with an AI model on a terminal side.

Step 1: The base station transmits, to the terminal and/or the OTT server, fourth information used to generate data and/or a label (for example, a model label, encoder output, encoder input, or a decoder update label), to trigger and configure the terminal to perform a model update.

The data and/or the label at least includes: the data and/or the label used to represent input of the AI model (for example, an encoder) on the terminal side, or, the data and/or the label used to represent output of the AI model (for example, an encoder) on the terminal side.

The fourth information includes information indicating one or more of the following parameters:
(1) a parameter of the first information and/or the second information;
(2) a CSI feedback parameter;
   optionally, the CSI feedback parameter includes at least one of a CSI compression rate, a CSI load, and a CSI quantization method, where the CSI quantization method refers to how to quantize a compressed CSI coefficient by using a particular number of bits;
(3) an antenna port parameter;
   optionally, the antenna port parameter includes at least one of a number of ports and a number of reference signal resources;
(4) a time domain parameter;
(5) a frequency domain parameter;
(6) a channel measurement parameter; and
(7) a channel characteristic parameter.

Optionally, at least some parameters for model update in step 1 may be the same as parameters of an associated CSI report.

Optionally, in step 1, the terminal may transmit a channel measurement report to the OTT server.

Step 2: The OTT server generates data and/or a label for a model update according to the fourth information configured by the base station, and the OTT server transmits the data and/or the label to the terminal or the base station.

For example, the OTT server generates, according to the fourth information configured by the base station, data and/or a label used to update the AI model on the terminal side, updates the AI model on the terminal side by using the data, and takes output of the obtained AI model on the terminal side as the label.

Optionally, the OTT server transmits the updated AI model (which may include a corresponding model ID) on the terminal side to the terminal. The OTT server or the terminal transmits the data and/or the label to the base station.

Optionally, if there is a connection between the base station and the OTT server, the OTT server transmits the data and/or the label to the base station.

Optionally, the OTT server transmits an associated model ID to the base station.

Optionally, if there is no connection between the base station and the OTT server, the OTT server transmits the data and/or the label to the terminal, and the terminal forwards the data and/or the label to the base station.

Optionally, the data structure includes at least one of the following:
(1) each piece of data and each label are in one-to-one correspondence;
(2) the data includes a plurality of data sets, each data set is an updated Batch, and the plurality of data sets form an update iteration, or, the plurality of data sets (or a plurality of iterations) form an Epoch; and
(3) the data includes the data sets, and each data set is associated with a label.

Optionally, in step 2, the terminal or the OTT server transmits a model ID associated with the AI model on the terminal side to the base station.

Step 3: The base station updates a first model on a base station side by using received data and/or label, and transmits an identifier of update failure or update success to the terminal according to an update result.

Optionally, if the terminal receives the identifier of the update success, the terminal reports the CSI according to the updated AI model on the terminal side.

Optionally, if the terminal receives the identifier of the update failure, the terminal falls back to a predefined eType II CSI reporting configuration to report the CSI.

Optionally, after receiving the identifier of the update success or failure, the terminal releases a configuration of the one or more parameters in the fourth information in step 1, for example, a configuration of the reference signal for channel parameter measurement.

Optionally, the base station transmits the model ID and the identifier of the update success to the terminal together, or the base station transmits the model ID to the terminal, to identify the update success.

For example, an identifier indicated by the base station is 0, indicating the update failure. An identifier indicated by the base station is greater than or equal to 1, indicating the update success. A specific value indicates the model ID.

Or, after receiving the identifier of the update success, the terminal transmits an associated model ID to the base station.

It may be understood that the foregoing step 1 to step 3 only represent some operations involved in performing a model update. These operations are not necessary in all cases. Steps that may be omitted include, but are not limited to:
(1) step 0 is not a necessary step in a case that a network side monitors model performance; and
(2) The terminal (or the OTT server) may automatically generate data for a model update according to a channel measurement result and/or parameter configuration used by the base station for CSI feedback. In this case, step 1 is not a necessary step.

It may be understood that numbers of the foregoing steps do not indicate a sequence of these operations, and are merely for ease of distinguishing and describing. A possible example of an execution sequence includes, but is not limited to:
(1) the steps are performed according to the foregoing sequence of step 0, step 1, step 2, and step 3;
(2) step 0 may be performed after step 1 or step 2, that is, the base station first reports a configuration parameter for a possible model update or CSI, and the terminal (or the OTT server) subsequently performs corresponding data transmission and model update according to a configuration of the base station;
(3) the model update request message in step 0 and the data and/or the label in step 2 are transmitted to the base station together; and
(4) the model update request message in step 0 is performed after step 3, that is, the terminal, the OTT server, and the base station first perform the model update, and whether the terminal uses the model may be determined after the update is completed. Further, the model update request message of the terminal is transmitted only for the updated model.

### Embodiment 4

After the model update is performed according to Embodiment 1 or Embodiment 2, to prevent a terminal from repeatedly training the same or similar channel environment in a short term and reduce training overheads and complexity, at least one of the following operations may be further performed:
(1) A base station, a terminal and/or an OTT server associates a model ID for a newly updated AI model (for example, an encoder) on a terminal side.

Optionally, the model ID may be obtained by at least one of the following operations:
(a) the terminal reports an associated model ID to the base station in step 0 or step 2;
(b) the terminal reports the associated model ID to the base station after receiving the identifier of update success in step 3;
(c) the OTT server transmits the associated model ID to the base station in step 2; and
(d) the base station transmits the model ID and an identifier of the update success to the terminal (or the OTT server) together in step 3, or, transmits the model ID to the terminal in step 3, to identify the update success.

Optionally, the base station activates or deactivates the AI model on the terminal side through the model ID.
(a) An activating model ID indicates that the terminal reports CSI by using the AI model on the terminal side corresponding to the model ID.
(b) A deactivating model ID indicates that the terminal does not report CSI by using the AI model on the terminal side corresponding to the model ID.
(c) The base station may select, activate or deactivate the model ID according to the fourth information in step 1 and the channel measurement report reported by the ID.

Optionally, due to a limitation of a storage capability on the terminal side, the terminal will report to the base station (and/or the OTT server) that one or more model IDs fail, does not use a model corresponding to a failed model ID any longer, and does not store the model corresponding to the model ID any longer.

Optionally, the terminal will only report that a deactivated model ID is invalid, or will only report that a model ID that is not used currently is invalid.

Optionally, the base station transmits signaling to the terminal to notify the terminal that one or more model IDs fail, and the terminal does not store the model corresponding to the failed model ID any longer.

Optionally, the base station may notify that a deactivated model ID is invalid.

By the foregoing method, if a channel environment entered by the terminal is similar to a channel environment corresponding to a previously trained model, the terminal does not need to perform training again to perform a model update, and the base station may directly indicate a model ID to activate and use the corresponding model.

### Embodiment 5

Referring to FIG. 8, this embodiment includes first updating an AI model on a base station side, and then transmitting, by the base station, data and/or a label to a terminal or an OTT server for updating an AI model on a terminal side.

Step 0: The terminal transmits a model update request message (that is, a first message) in a case that the terminal monitors model performance.

Optionally, the model update request message carries a model ID associated with an AI model on a terminal side.

Step 1: The terminal (or the OTT server) reports auxiliary information (or capability information) to the base station.

Optionally, the auxiliary information (or capability information) may include at least one of the following:
(1) a data requirement or capability (for example, a data volume, a data structure, a number of data sets, a number of batches, a number of iterations, and a number of epochs);
(2) a label requirement or capability (for example, a number of labels, and an association relationship between the labels and data);
(3) an association relationship between the first information and the second information,
   where the first information is data and/or the label used to represent input of the AI model (for example, an encoder) on the terminal side, or the second information is the data and/or the label used to represent output of the AI model (for example, an encoder) on the terminal side; and
(4) a channel characteristic parameter (for example, a channel large-scale parameter).

Optionally, if there is an OTT server, and there is a connection between the OTT server and the base station, the auxiliary information (or the capability information) may alternatively be transmitted to the base station by the OTT server.

Optionally, the terminal may transmit the auxiliary information to the OTT server, for example, the channel characteristic parameter.

Step 2: The base station transmits the fourth information to the terminal (or the OTT server).

The fourth information includes information indicating one or more of the following parameters:
(1) a parameter of the first information and/or the second information;
(2) a CSI feedback parameter;
   optionally, the CSI feedback parameter includes at least one of a CSI compression rate, a CSI load, and a CSI quantization method, where the CSI quantization method refers to how to quantize a compressed CSI coefficient by using a particular number of bits;
(3) an antenna port parameter;
   optionally, the antenna port parameter includes at least one of a number of ports and a number of reference signal resources;
(4) a time domain parameter;
(5) a frequency domain parameter;
(6) a channel measurement parameter; and
(7) a channel characteristic parameter.

Optionally, if there is an OTT server, and there is no connection between the base station and the OTT server, the terminal may forward the received fourth information to the OTT server.

Optionally, if there is an OTT server, and there is a connection between the base station and the OTT server, the base station directly transmits the fourth information to the OTT server.

Optionally, at least some parameters for model update in step 1 may be the same as parameters of an associated CSI report.

Step 3: The base station generates data and/or a label for a model update according to the fourth information, and the base station transmits the data and/or the label to the terminal or the OTT server.

For example, the base station generates, according to the fourth information, the data used to update the AI model on the terminal side, and updates the AI model on the base station side by using the data to obtain the label. The base station transmits the data and/or the label to the terminal or the OTT server.

Optionally, the data and/or the label only includes input of the AI model (for example, an encoder) on the terminal side.

Optionally, if there is no OTT server, the base station transmits the data and/or the label to the terminal.

Optionally, if there is an OTT server, and there is a connection between the base station and the OTT server, the base station transmits the data and/or the label to the OTT server.

Optionally, if there is an OTT server, and there is no connection between the base station and the OTT server, the base station transmits the data and/or the label to the terminal, and the terminal forwards the data and/or the label to the OTT server.

Optionally, the base station transmits the model ID to the terminal or the OTT server.

Optionally, the data and/or the label described above is generated according to a particular data structure, for example, generated according to a data structure configured by the base station.

Optionally, the data structure includes at least one of the following:
(1) each piece of data and each label are in one-to-one correspondence;
(2) the data includes a plurality of data sets, each data set is an updated Batch, and the plurality of data sets form an update iteration, or, the plurality of data sets (or a plurality of iterations) form an Epoch; and
(3) the data includes the data sets, and each data set is associated with a label.

Optionally, the base station transmits the associated model ID to the terminal or the OTT server.

Step 4: The terminal or the OTT server updates the AI model on the terminal side by using received data and/or label, and transmits an identifier of update failure or update success to the base station according to an update result.

Optionally, in step 4, the OTT server transmits an updated AI model on the terminal side and/or a model ID to the terminal.

Optionally, if the terminal transmits the identifier of the update success, and the base station receives the identifier of the update success, the terminal transmits the CSI according to an updated first model, and the base station receives the CSI according to a trained decoder.

Optionally, if the terminal transmits the identifier of the update failure, and the base station receives the identifier of the update failure, the terminal falls back to a predefined eType II CSI reporting configuration to report the CSI.

Optionally, after receiving the identifier of the update success or failure, the base station releases a configuration of the one or more parameters in the fourth information in step 1, for example, a configuration of a reference signal for channel parameter measurement.

Optionally, the terminal transmits the model ID and the identifier of the update success to the base station together, or the terminal transmits the model ID to the base station, to identify the update success.

For example, an identifier indicated by the terminal is 0, indicating the update failure. An identifier indicated by the terminal is greater than or equal to 1, indicating the update success. A specific value indicates the model ID.

Or, after receiving the identifier of the update success, the base station transmits an associated model ID to the terminal.

Optionally, after receiving the associated model ID, the terminal transmits the CSI according to the updated first model.

It may be understood that the foregoing step 1 to step 4 only represent some operations involved in performing a model update. These operations are not necessary in all cases. Steps that may be omitted include, but are not limited to:
(1) step 0 is not a necessary step in a case that a network side monitors model performance; and
(2) The terminal (or the OTT server) may automatically generate data for a model update according to a channel measurement result and/or parameter configuration used by the base station for CSI feedback. In this case, step 2 is not a necessary step.

It may be understood that numbers of the foregoing steps do not indicate a sequence of these operations, and are merely for ease of distinguishing and describing. A possible example of an execution sequence includes, but is not limited to:
(1) the steps are performed according to the foregoing sequence of step 0, step 1, step 2, step 3, and step 4;
(2) orders of step 1 and step 2 may be exchanged;
(3) step 0 is performed after step 1 or step 2, that is, the terminal may report terminal capability information or auxiliary information before a behavior such as transmitting a model update request message starts.
   Similarly, the base station first configures parameter for a possible model update or CSI report, and the terminal (or the OTT server) subsequently performs corresponding data transmission and model update according to the configuration of the base station.
(4) The request in step 0 is performed after step 3 or step 4, that is, the terminal (or the OTT server) and the base station first perform updating, and whether the terminal uses the model is determined after the updating is completed.

Further, the model update request message of the terminal is transmitted only for the updated model.

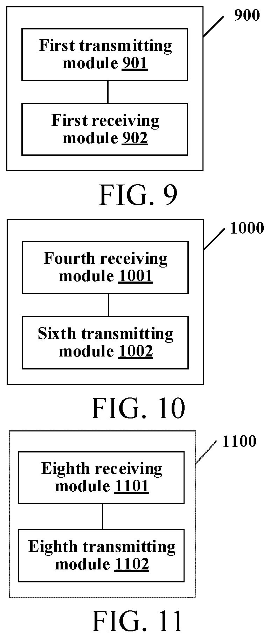

Referring to FIG. 9, this embodiment of this application provides a model updating apparatus, applied to a first device. The apparatus 900 includes:
a first transmitting module 901, configured to transmit first information and/or second information to a second device, where the first information and/or the second information is used to update a first model on the second device side and/or update a second model on the first device side, and
the first input is different from the second input; and
a first receiving module 902, configured to receive third information from the second device, where the third information is used to indicate that the first model is successfully updated or the first model fails to be updated.

In an implementation of this application, the apparatus further includes:
a first processing module, configured to: process channel state information CSI according to the second model in a case that the third information indicates that the first model is successfully updated; or, process, by the first device, the CSI according to a preset codebook in a case that the third information indicates that the first model fails to be updated.

In an implementation of this application, the apparatus further includes:
a second receiving module, configured to receive fourth information, where the fourth information includes one or more parameters used to generate first information and/or second information.

In an implementation of this application, the fourth information is at least one of the following:
(1) RAN high-layer configuration information;
(2) core network information;
(3) terminal capability information; and
(4) terminal auxiliary information.

In an implementation of this application, the fourth information is used to trigger to update the first model and/or the second model.

In an implementation of this application, the fourth information may include information indicating one or more of the following parameters:
(1) a parameter of the first information and/or the second information;
(2) a CSI feedback parameter;
   optionally, the CSI feedback parameter includes at least one of a CSI compression rate, a CSI load, and a CSI quantization method, where the CSI quantization method refers to how to quantize a compressed CSI coefficient by using a particular number of bits;
(3) an antenna port parameter;
   optionally, the antenna port parameter includes at least one of a number of ports and a number of reference signal resources;
(4) a time domain parameter;
(5) a frequency domain parameter;
(6) a channel measurement parameter; and
(7) a channel characteristic parameter.

In an implementation of this application, the parameter of the first information and/ the parameter of the second information includes one or more of the following:
(1) a data size of the first information and/or the second information;
   optionally, the data structure includes one or more of the following: (a) each piece of first information and each piece of second information are in one-to-one correspondence; (b) the first information includes a plurality of information groups, and each information group is an update batch, or the plurality of information groups form an update iteration, or the plurality of information groups form an update epoch; and (c) each information group in the first information is associated with one piece of second information;
(2) a data structure of the first information and/or the second information;
(3) a number of labels in the first information and/or a number of labels in the second information;
(4) an association relationship between the first information and the second information; and
(5) a compression parameter of the first information and/or the second information.

Optionally, the compression parameter includes one or more of the following: (a) a compression rate; (b) a parameter indicating joint compression of the first information and the second information; and (c) a parameter indicating separate compression of the first information and compression of the second information.

In an implementation of this application, the apparatus further includes:
a second transmitting module, configured to transmit the fourth information to a third device.

In an implementation of this application, the apparatus further includes:
the first device receives, from a third device, at least one of the first information and/or the second information, a parameter of the first model, and a model identifier associated with the first model.

In an implementation of this application, the apparatus further includes:
a third receiving module, configured to transmit a channel measurement report to a third device.

In an implementation of this application, the apparatus further includes:
a release module, configured to release a configuration of the one or more parameters in the fourth information in a case that the first device receives the third information from the second device.

In an implementation of this application, the apparatus further includes:
a third transmitting module, configured to transmit a first message, where the first message is used to request to update the first model and/or the second model.

In an implementation of this application, the third transmitting module is further configured to:
transmit a first message in a case that the first device performs model performance monitoring.

In an implementation of this application, the first message carries a model identifier associated with the first model and/or the second model.

In an implementation of this application, the first transmitting module is further configured to: transmit the first information and/or the second information and a model identifier associated with the first model and/or the second model to the second device.

In an implementation of this application, the apparatus further includes:
a fourth transmitting module, configured to transmit a model identifier associated with the first model to the second device.

In an implementation of this application, the third information includes a model identifier associated with the first model and an identifier of update success, or, the third information includes a model identifier associated with the first model.

In an implementation of this application, the apparatus further includes:
a fifth transmitting module, configured to transmit fifth information, where the fifth information is used to indicate that one or more model identifiers are invalid.

In an implementation of this application, the model identifier includes at least one of the following:
an index associated with a parameter indicated by the fourth information; and
an index associated with the first information and/or the second information.

In an implementation of this application, the first information includes data and/or a label used to represent input of the second model on the first device side or the first model on the second device side;
and/or,
the second information includes data and/or a label used to represent output of the second model on the first device side or the first model on the second device side.

In an implementation of this application, the first device is a terminal, and the second device is a base station, or the first device is a base station, and the second device is a terminal.

In an implementation of this application, the third device is a network node for model calculation.

The apparatus provided in this embodiment of this application can implement all processes implemented by the method embodiments in FIG. 2 and the same technical effects are achieved. To avoid repetition, details are not described herein again.

Referring to FIG. 10, this embodiment of this application provides a model updating apparatus, applied to a second device. The apparatus 1000 includes:
a fourth receiving module 1001, configured to receive first information and/or second information, where the first information and/or the second information is used to update a first model on the second device side and/or update a second model on a first device side; and
a sixth transmitting module 1002, configured to transmit third information, where the third information is used to indicate that the first model is successfully updated or the first model fails to be updated.

In an implementation of this application, the apparatus further includes:
a processing module, configured to process CSI according to the first model in a case that the third information indicates that the first model is successfully updated, or process the CSI according to a preset codebook in a case that the third information indicates that the first model fails to be updated.

In an implementation of this application, the apparatus further includes:
a seventh transmitting module, configured to transmit fourth information, where the fourth information includes one or more parameters used to generate first information and/or second information.

In an implementation of this application, the fourth information is at least one of the following:
(1) RAN high-layer configuration information;
(2) core network information;
(3) terminal capability information; and
(4) terminal auxiliary information.

In an implementation of this application, the fourth information is used to trigger to update the first model and/or the second model.

In an implementation of this application, the fourth information may include information indicating one or more of the following parameters:
(1) a parameter of the first information and/or the second information;
(2) a CSI feedback parameter;
   optionally, the CSI feedback parameter includes at least one of a CSI compression rate, a CSI load, and a CSI quantization method;
(3) an antenna port parameter;
   optionally, the antenna port parameter includes at least one of a number of ports and a number of reference signal resources;
(4) a time domain parameter;
(5) a frequency domain parameter;
(6) a channel measurement parameter; and
(7) a channel characteristic parameter.

In an implementation of this application, the parameter of the first information and/ the parameter of the second information includes one or more of the following:
(1) a data size of the first information and/or the second information;
   optionally, the data structure includes one or more of the following: (a) each piece of first information and each piece of second information are in one-to-one correspondence; (b) the first information includes a plurality of information groups, and each information group is an update batch, or the plurality of information groups form an update iteration, or the plurality of information groups form an update epoch; and (c) each information group in the first information is associated with one piece of second information;
(2) a data structure of the first information and/or the second information;
(3) a number of labels in the first information and/or a number of labels in the second information;
(4) an association relationship between the first information and the second information; and
(5) a compression parameter of the first information and/or the second information.

Optionally, the compression parameter includes one or more of the following: (a) a compression rate; (b) a parameter indicating joint compression of the first information and the second information; and (c) a parameter indicating separate compression of the first information and compression of the second information.

In an implementation of this application, the apparatus further includes:
a fifth receiving module, configured to receive a first message from the first device, the first message being used to request to obtain the second information.

In an implementation of this application, the first message carries a model identifier associated with the first model and/or the second model.

In an implementation of this application, that the second device receives the first information and/or the second information includes:
the second device receives the first information and/or the second information, and a model identifier associated with the first model and/or the second model.

In an implementation of this application, the apparatus further includes:
a sixth receiving module, configured to receive a model identifier associated with the first model.

In an implementation of this application, the third information includes a model identifier associated with the first model and an identifier of update success, or, the third information includes a model identifier associated with the first model and/or the second model.

In an implementation of this application, the apparatus further includes:
a third processing module, configured to select, activate, or deactivate the second model on the first device side according to the model identifier.

In an implementation of this application, the apparatus further includes:
a seventh receiving module, configured to receive fifth information from the first device, and/or, receive sixth information from a third device.

The fifth information or the sixth information is used to indicate that one or more model identifiers are invalid.

In an implementation of this application, the model identifier includes at least one of the following:
an index associated with a parameter indicated by the fourth information; and
an index associated with the first information and/or the second information.

In an implementation of this application, the first information includes data and/or a label used to represent input of the second model on the first device side or the first model on the second device side;
and/or,
the second information includes data and/or a label used to represent output of the second model on the first device side or the first model on the second device side.

In an implementation of this application, the second device is a base station, and the first device is a terminal, or, the second device is a terminal, and the first device is a base station.

In an implementation of this application, the third device is a network node for model calculation.

The apparatus provided in this embodiment of this application can implement all processes implemented by the method embodiments in FIG. 3 and the same technical effects are achieved. To avoid repetition, details are not described herein again.

Referring to FIG. 11, this embodiment of this application provides a model updating apparatus, applied to a third device. The apparatus 1100 includes:
an eighth receiving module 1101, configured to receive fourth information, where the fourth information includes one or more parameters used to generate first information and/or second information; and/or
an eighth transmitting module 1102, configured to transmit the first information and/or the second information, where the first information and/or the second information is used to update a first model on a second device side and/or update a second model on a first device side.

In an implementation of this application, the fourth information is at least one of the following:
(1) RAN high-layer configuration information;
(2) core network information;
(3) terminal capability information; and
(4) terminal auxiliary information.

In an implementation of this application, the fourth information is used to trigger to update the first model and/or the second model.

In an implementation of this application, the fourth information may include information indicating one or more of the following parameters:
(1) a parameter of the first information and/or the second information;
(2) a CSI feedback parameter;
   optionally, the CSI feedback parameter includes at least one of a CSI compression rate, a CSI load, and a CSI quantization method;
(3) an antenna port parameter;
   optionally, the antenna port parameter includes at least one of a number of ports and a number of reference signal resources;
(4) a time domain parameter;
(5) a frequency domain parameter;
(6) a channel measurement parameter; and
(7) a channel characteristic parameter.

In an implementation of this application, the parameter of the first information and/ the parameter of the second information includes one or more of the following:
(1) a data size of the first information and/or the second information;
   optionally, the data structure includes one or more of the following: (a) each piece of first information and each piece of second information are in one-to-one correspondence; (b) the first information includes a plurality of information groups, and each information group is an update batch, or the plurality of information groups form an update iteration, or the plurality of information groups form an update epoch; and (c) each information group in the first information is associated with one piece of second information;
(2) a data structure of the first information and/or the second information;
(3) a number of labels in the first information and/or a number of labels in the second information;
(4) an association relationship between the first information and the second information; and
(5) a compression parameter of the first information and/or the second information.

Optionally, the compression parameter includes one or more of the following: (a) a compression rate; (b) a parameter indicating joint compression of the first information and the second information; and (c) a parameter indicating separate compression of the first information and compression of the second information.

In an implementation of this application, the eighth transmitting module 1102 is further configured to transmit the first information and/or the second information to the first device and/or the second device.

In an implementation of this application, the apparatus further includes:
a ninth transmitting module, configured to transmit a parameter of the first model and/or the second model, and/or, a model identifier associated with the first model and/or the second model to the first device and/or the second device.

In an implementation of this application, the apparatus further includes:
a ninth receiving module, configured to receive a channel measurement report.

In an implementation of this application, the apparatus further includes:
a tenth transmitting module, configured to transmit sixth information, where the sixth information is used to indicate that one or more model identifiers are invalid.

In an implementation of this application, the model identifier includes at least one of the following:
an index associated with a parameter indicated by the fourth information; and
an index associated with the first information and/or the second information.

In an implementation of this application, the first information includes data and/or a label used to represent input of the second model on the first device side or the first model on the second device side;
and/or,
the second information includes data and/or a label used to represent output of the second model on the first device side or the first model on the second device side.

In an implementation of this application, the third device is a network node for model calculation, the first device is a terminal, and the second device is a base station;
or,
the third device is a network node for model calculation, the first device is a base station, and the second device is a terminal.

The apparatus provided in this embodiment of this application can implement all processes implemented by the method embodiments in FIG. 4 and the same technical effects are achieved. To avoid repetition, details are not described herein again.

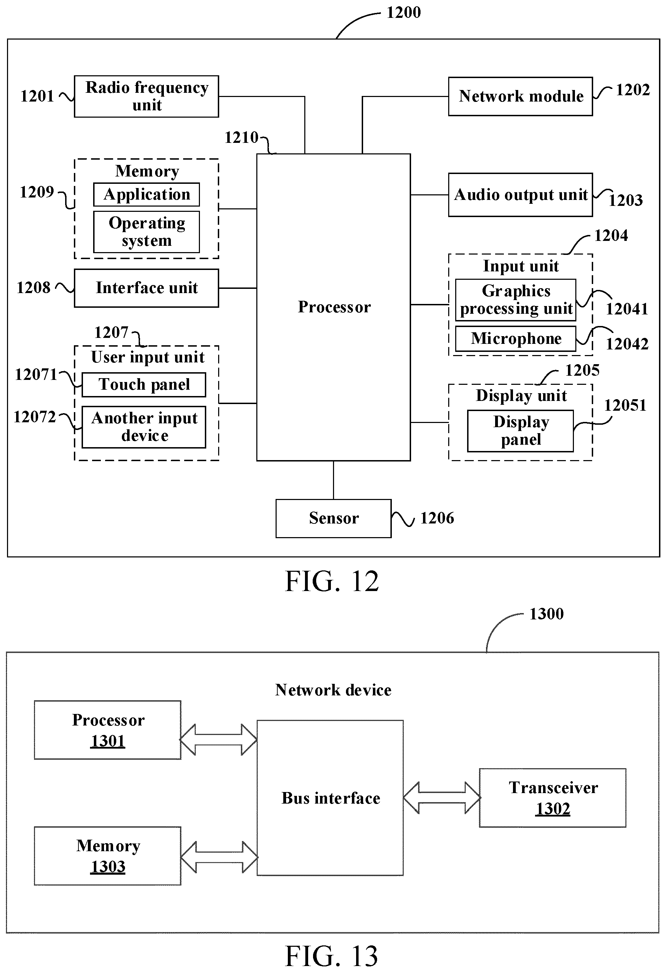

FIG. 12 is a schematic diagram of a hardware structure of a terminal that implements this embodiment of this application. The terminal 1200 includes, but is not limited to: at least part components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

Those skilled in the art may understand that the terminal 1200 may further include a power supply (for example, a battery) for supplying power to various components. The power supply may be logically connected to the processor 1210 through a power management system, thereby realizing functions such as charging management, discharging management, and power consumption management through the power management system. A terminal structure shown in FIG. 12 does not constitute a limitation to the terminal. The terminal may include more or fewer components than those shown in the figure, or combine some components, or have different component arrangements. Details are not described herein again.

It is to be understood that, in embodiments of this application, the input unit 1204 may include a graphics processing unit (Graphics Processing Unit, GPU) 12041 and a microphone 12042. The graphics processing unit 12041 performs processing on image data of a static picture or a video obtained by an image capture apparatus (for example, a camera) in a video capture mode or an image capture mode. The display unit 1206 may include a display panel 12061. The display panel 12061 may be configured in the form of a liquid crystal display, an organic light-emitting diode, or the like. The user input unit 1207 includes at least one of a touch panel 12071 and another input device 12072. The touch panel 12071 is alternatively referred to as a touchscreen. The touch panel 12071 may include two parts: a touch detection apparatus and a touch controller. The another input device 12072 may include, but is not limited to, a physical keyboard, a functional key (such as a volume control key or a switch key), a track ball, a mouse, and a joystick. Details are not described herein again.

In embodiments of this application, after receiving downlink data from a network device, the radio frequency unit 1201 may transmit the downlink data to the processor 1210 for processing. In addition, the radio frequency unit 1201 may transmit uplink data to the network device. Generally, the radio frequency unit 1201 includes, but is not limited to, an antenna, an amplifier, a transceiver, a coupler, a low noise amplifier, a duplexer, and the like.

The memory 1209 may be configured to store a software program and various types of data. The memory 1209 may mainly include a first storage area storing a program or an instruction and a second storage area storing data. The first storage area may store an operating system, an application or an instruction required by at least one function (for example, a sound playback function and an image display function), and the like. In addition, the memory 1209 may include a volatile memory or a non-volatile memory, or the memory 1209 may include both a volatile memory and a non-volatile memory. The non-volatile memory may be a read-only memory (Read-Only Memory, ROM), a programmable read-only memory (Programmable ROM, PROM), an erasable programmable read-only memory (EPROM), an electrically erasable programmable read-only memory (Erasable PROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DR RAM). The memory 1209 in the embodiments of this application includes, but is not limited to, these and any other suitable types of memories.

The processor 1210 may include one or more processing units. Optionally, the processor 1210 integrates an application processor and a modulation and demodulation processor. The application processor mainly processes operations related to an operating system, a user interface, an application program, and the like. The modulation and demodulation processor mainly processes a wireless communication signal, for example, a baseband processor. It may be understood that, the foregoing modulation and demodulation processor may alternatively not be integrated into the processor 1210.

The terminal provided in the embodiment of this application can implement the various processes implemented in the method embodiment in FIG. 3 and achieve the same technical effects. To avoid repetition, details are not described herein again.

Referring to FIG. 13, which is a structural diagram of a network device according to an embodiment of the present disclosure. As shown in FIG. 13, the network device 1300 includes: a processor 1301, a transceiver 1302, a memory 1303, and a bus interface. The processor 1301 may be responsible for managing a bus architecture and common processing. The memory 1303 may store data used when the processor 1301 performs an operation.

In an embodiment of this application, the communication device 1300 further includes: a program that is stored in the memory 1303 and is executable on the processor 1301, and the program, when executed by the processor 1301, implements the steps in the method shown in FIG. 3 or FIG. 4.

In FIG. 13, the bus architecture may include any number of interconnected buses and bridges. Specifically, one or more processors represented by the processor 1301 are linked to various circuits of a memory represented by the memory 1303. The bus architecture may further link various other circuits such as a peripheral device, a voltage regulator, and a power management circuit together. These are well known in the art, and therefore, are not further described herein. The bus interface provides an interface. The transceiver 1302 may be a plurality of elements, including a transmitter and a receiver, and providing a unit configured to communicate with various other apparatuses on a transmission medium.

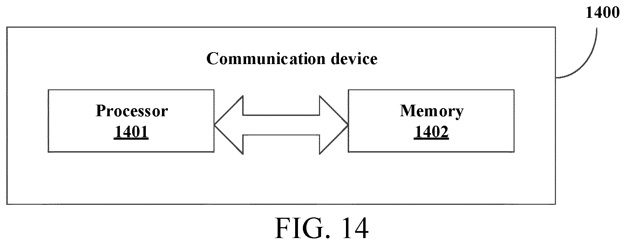

Optionally, as shown in FIG. 14, an embodiment of this application further provides a communication device 1400, including a processor 1401 and a memory 1402. A program or an instruction executable on the processor 1401 are stored in the memory 1402. For example, when the communication device 1400 is a terminal, and when the program or the instruction is executed by the processor 1401, various steps of the method embodiment in FIG. 2 are implemented. When the communication device 1400 is a core network device, and when the program or the instruction is executed by the processor 1401, various steps of the method embodiment in FIG. 3 or FIG. 4 are implemented, and the same technical effects can be achieved. To avoid repetition, details are not described herein again.

An embodiment of this application further provides a readable storage medium. A program or an instruction are stored in the readable storage medium. When the program or the instruction is executed by the processor, various processes of the method in FIG. 2, FIG. 3 or FIG. 4 are implemented, and the same technical effects can be achieved. To avoid repetition, details are not described herein again.

The processor may be a processor in the terminal in the foregoing embodiments. The readable storage medium includes a computer-readable storage medium, such as a computer read-only memory ROM, a random access memory RAM, a magnetic disc, an optical disc, or the like.

An embodiment of this application further provides a chip. The chip includes a processor and a communication interface. The processor is configured to execute a program or an instruction to implement various processes of various method embodiments in FIG. 2, FIG. 3 or FIG. 4, and can achieve the same technical effects. To avoid repetition, details are not described herein again.

It is to be understood that the chip mentioned in this embodiment of this application may alternatively be referred to as a system-level chip, a system chip, a chip system, a system-on-chip, or the like.

An embodiment of this application further provides a computer program/program product. The computer program/program product is stored on a storage medium. The computer program/program product, when executed by at least one processor, implements the various processes of the method embodiment in FIG. 2, FIG. 3 or FIG. 4, and can achieve the same technical effects. To avoid repetition, details are not described herein again.

An embodiment of this application further provides a communication system. The communication system includes a terminal and a network device. The terminal is configured to perform the various processes in FIG. 2 and the above method embodiments. The network device is configured to perform the various processes in FIG. 3 or FIG. 4 and the above method embodiments, and can achieve the same technical effects. To avoid repetition, details are not described herein again.

It is to be noted that, terms "include", "comprise", or any other variation thereof herein are intended to cover a non-exclusive inclusion, such that a process, method, article or apparatus including a series of elements not only includes those elements, but also includes other elements that are not explicitly listed, or includes elements inherent to such a process, method, article or apparatus. Without more limitations, elements defined by the sentence "including one" does not exclude that there are other same elements in the process, the method, the article, or the apparatus. In addition, it is to be noted that scopes of the methods and apparatuses in implementations of this application are not limited to performing functions in an order shown or discussed, but may alternatively include performing the functions in a substantially simultaneous manner or in a reverse order according to the functions involved. For example, the described methods may be implemented in an order different from that described, and various steps may be added, omitted, or combined. In addition, features described with reference to some examples may alternatively be combined in other examples.

Through description of the above implementations, those skilled in the art may clearly learn that the methods according to the foregoing embodiments may be implemented by software and a necessary universal hardware platform, or may be implemented by hardware certainly. However, the former is a better implementation in many cases. Based on such an understanding, the technical solutions of this application essentially, or the part contributing to the conventional technology may be embodied in the form of a computer software product. The computer software product is stored in a storage medium (for example, a ROM/RAM, a magnetic disc, or a compact disc) including several instructions to enable a terminal (which may be a mobile phone, a computer, a server, an air conditioner, a network side device, or the like) to perform the methods described in various embodiments of this application.

Embodiments of this application have been described above with reference to the accompanying drawings. However, this application is not limited to the foregoing specific implementations. The foregoing specific embodiments are merely examples rather than restrictions. Those of ordinary skill in the art may make many variations under the teaching of this application without departing from the spirit of this application, and such variations all fall within the scope of protection of this application.

## Claims

1. A model updating method, comprising:
transmitting, by a first device, first information and/or second information to a second device, wherein the first information and/or the second information is used to update a first model on the second device side and/or update a second model on the first device side; and
receiving, by the first device, third information from the second device, wherein the third information is used to indicate that the first model is successfully updated or the first model fails to be updated.

2. The method according to claim 1, further comprising:
processing, by the first device, channel state information CSI according to the second model in a case that the third information indicates that the first model is successfully updated;
or,
processing, by the first device, the CSI according to a preset codebook in a case that the third information indicates that the first model fails to be updated.

3. The method according to claim 1, further comprising:
receiving, by the first device, fourth information, wherein the fourth information comprises one or more parameters used to generate the first information and/or the second information.

4. The method according to claim 3, wherein the fourth information is at least one of the following:
radio access network RAN high-layer configuration information;
core network information;
terminal capability information; and
terminal auxiliary information.

5. The method according to claim 3, wherein the fourth information is used to trigger to update the first model and/or the second model.

6. The method according to any one of claims 3 to 5, wherein the fourth information comprises information indicating one or more of the following parameters:
a parameter of the first information and/or the second information;
a CSI feedback parameter;
an antenna port parameter;
a time domain parameter;
a frequency domain parameter;
a channel measurement parameter; and
a channel characteristic parameter.

7. The method according to claim 6, wherein the parameter of the first information and/or the second information comprises one or more of the following:
a data size of the first information and/or the second information;
a data structure of the first information and/or the second information;
a number of labels in the first information and/or a number of labels in the second information;
an association relationship between the first information and/or the second information; and
a compression parameter of the first information and/or the second information.

8. The method according to claim 6, wherein the CSI feedback parameter comprises at least one of a CSI compression rate, a CSI load, and a CSI quantization method.

9. The method according to claim 6, wherein the antenna port parameter comprises at least one of a number of ports and a number of reference signal resources.

10. The method according to claim 7, wherein the data structure comprises one or more of the following:
each piece of first information and each piece of second information are in one-to-one correspondence;
the first information comprises a plurality of information groups, and each information group is an update batch, or the plurality of information groups form an update iteration, or the plurality of information groups form an update epoch; and
each information group in the first information is associated with one piece of second information.

11. The method according to claim 7, wherein the compression parameter comprises one or more of the following:
a compression rate;
a parameter indicating joint compression of the first information and the second information; and
a parameter indicating separate compression of the first information and the second information.

12. The method according to claim 3, further comprising:
transmitting, by the first device, the fourth information to a third device.

13. The method according to claim 3, further comprising:
receiving, by the first device from a third device, at least one of the following:
the first information and/or the second information;
a parameter of the first model and/or the second model; and
a model identifier associated with the first model and/or the second model.

14. The method according to claim 1, further comprising:
transmitting, by the first device, a channel measurement report to a third device.

15. The method according to claim 3, further comprising:
releasing, by the first device, a configuration of the one or more parameters in the fourth information in a case that the first device receives the third information from the second device.

16. The method according to claim 1, further comprising:
transmitting, by the first device, a first message, wherein the first message is used to request to update the first model and/or the second model.

17. The method according to claim 16, wherein the transmitting, by the first device, a first message comprises:
transmitting, by the first device, the first message in a case that the first device performs model performance monitoring.

18. The method according to claim 16 or 17, wherein the first message carries a model identifier associated with the first model and/or the second model.

19. The method according to claim 1, wherein the transmitting, by a first device, first information and/or second information to a second device comprises:
transmitting, by the first device, the first information and/or the second information, and a model identifier associated with the first model and/or the second model to the second device.

20. The method according to claim 1, wherein after receiving the third information, the method further comprises:
transmitting, by the first device, a model identifier associated with the first model to the second device.

21. The method according to claim 1, wherein
the third information comprises a model identifier associated with the first model and an identifier of update success, or, the third information comprises a model identifier associated with the first model.

22. The method according to claim 1, further comprising:
transmitting, by the first device, fifth information, wherein the fifth information is used to indicate that one or more model identifiers are invalid.

23. The method according to claim 13, 18, 19, 20, 21, or 22, wherein the model identifier comprises at least one of the following:
an index associated with a parameter indicated by the fourth information; and
an index associated with the first information and/or the second information.

24. The method according to claim 1, wherein
the first information comprises data and/or a label used to represent input of the second model on the first device side or the first model on the second device side;
and/or,
the second information comprises data and/or a label used to represent output of the second model on the first device side or the first model on the second device side.

25. The method according to claim 1, wherein
the first device is a terminal, and the second device is a base station, or, the first device is a base station, and the second device is a terminal.

26. The method according to claim 12, 13, or 14, wherein the third device is a network node for model calculation.

27. A model updating method, comprising:
receiving, by a second device, first information and/or second information, wherein the first information and/or the second information is used to update a first model on the second device side and/or update a second model on a first device side; and
transmitting, by the second device, third information, wherein the third information is used to indicate that the first model is successfully updated or the first model fails to be updated.

28. The method according to claim 27, further comprising:
processing, by the second device, channel state information CSI according to the first model in a case that the third information indicates that the first model is successfully updated;
or,
processing, by the second device, the CSI according to a preset codebook in a case that the third information indicates that the first model fails to be updated.

29. The method according to claim 28, further comprising:
transmitting, by the second device, fourth information, wherein the fourth information comprises one or more parameters used to generate the first information and/or the second information.

30. The method according to claim 29, wherein the fourth information is at least one of the following:
RAN high-layer configuration information;
core network information;
terminal capability information; and
terminal auxiliary information.

31. The method according to claim 29, wherein the fourth information is used to trigger to update the first model and/or the second model.

32. The method according to any one of claims 29 to 31, wherein the fourth information comprises information indicating one or more of the following parameters:
a parameter of the first information and/or the second information;
a CSI feedback parameter;
an antenna port parameter;
a time domain parameter;
a frequency domain parameter;
a channel measurement parameter; and
a channel characteristic parameter.

33. The method according to claim 32, wherein the parameter of the first information and/or the second information comprises one or more of the following:
a data size of the first information and/or the second information;
a data structure of the first information and/or the second information;
a number of labels in the first information and/or a number of labels in the second information;
an association relationship between the first information and the second information; and
a compression parameter of the first information and/or the second information.

34. The method according to claim 32, wherein the CSI feedback parameter comprises at least one of a compression rate, a CSI load, and a CSI quantization method.

35. The method according to claim 32, wherein the antenna port parameter comprises at least one of a number of ports and a number of reference signal resources.

36. The method according to claim 33, wherein the data structure comprises one or more of the following:
each piece of first information and each piece of second information are in one-to-one correspondence;
the first information comprises a plurality of information groups, and each information group is an update batch, or the plurality of information groups form an update iteration, or the plurality of information groups form an update epoch; and
each information group in the first information is associated with one piece of second information.

37. The method according to claim 33, wherein the compression parameter comprises one or more of the following:
a compression rate;
a parameter indicating joint compression of the first information and the second information; and
a parameter indicating separate compression of the first information and the second information.

38. The method according to claim 27, further comprising:
receiving, by the second device, a first message, wherein the first message is used to request to update the first model and/or the second model.

39. The method according to claim 38, wherein
the first message carries a model identifier associated with the first model and/or the second model.

40. The method according to claim 27, wherein the receiving, by a second device, first information and/or second information comprises:
receiving, by the second device, the first information and/or the second information, and a model identifier associated with the first model and/or the second model.

41. The method according to claim 27, wherein after the transmitting, by the second device, third information, the method further comprises:
receiving, by the second device, a model identifier associated with the first model.

42. The method according to claim 27, wherein
the third information comprises a model identifier associated with the first model and an identifier of update success, or, the third information comprises a model identifier associated with the first model.

43. The method according to any one of claims 39 to 42, further comprising:
selecting, activating, or deactivating, by the second device, the second model on the first device side according to the model identifier.

44. The method according to claim 27, further comprising:
receiving, by the second device, fifth information from the first device, and/or, receiving sixth information from a third device, wherein
the fifth information or the sixth information is used to indicate that one or more model identifiers are invalid.

45. The method according to any one of claims 39 to 44, wherein the model identifier comprises at least one of the following:
an index associated with a parameter indicated by the fourth information; and
an index associated with the first information and/or the second information.

46. The method according to any one of claims 27 to 45, wherein
the first information comprises data and/or a label used to represent input of the second model on the first device side or the first model on the second device side;
and/or,
the second information comprises data and/or a label used to represent output of the second model on the first device side or the first model on the second device side.

47. The method according to any one of claims 27 to 46, wherein
the second device is a base station, and the first device is a terminal, or, the second device is a terminal, and the first device is a base station.

48. The method according to claim 44, the third device is a network node for model calculation.

49. A model updating method, comprising:
receiving, by a third device, fourth information, wherein the fourth information comprises one or more parameters used to generate first information and/or second information; and
transmitting, by the third device, the first information and/or the second information, wherein the first information and/or the second information is used to update a first model on a second device side and/or update a second model on a first device side.

50. The method according to claim 49, wherein the fourth information is at least one of the following:
RAN high-layer configuration information;
core network information;
terminal capability information; and
terminal auxiliary information.

51. The method according to claim 49, wherein the fourth information is used to trigger to update the first model and/or the second model.

52. The method according to any one of claims 49 to 51, wherein the fourth information comprises information indicating one or more of the following parameters:
a parameter of the first information and/or the second information;
a CSI feedback parameter;
an antenna port parameter;
a time domain parameter;
a frequency domain parameter;
a channel measurement parameter; and
a channel characteristic parameter.

53. The method according to claim 52, wherein the parameter of the first information and/or the second information comprises one or more of the following:
a data size of the first information and/or the second information;
a data structure of the first information and/or the second information;
a number of labels in the first information and/or a number of labels in the second information;
an association relationship between the first information and the second information; and
a compression parameter of the first information and/or the second information.

54. The method according to claim 52, wherein the CSI feedback parameter comprises at least one of a compression rate, a CSI load, and a CSI quantization method.

55. The method according to claim 52, wherein the antenna port parameter comprises at least one of a number of ports and a number of reference signal resources.

56. The method according to claim 53, wherein the data structure comprises one or more of the following:
each piece of first information and each piece of second information are in one-to-one correspondence;
the first information comprises a plurality of information groups, and each information group is an update batch, or the plurality of information groups form an update iteration, or the plurality of information groups form an update epoch; and
each information group in the first information is associated with one piece of second information.

57. The method according to claim 53, wherein the compression parameter comprises one or more of the following:
a compression rate;
a parameter indicating joint compression of the first information and the second information; and
a parameter indicating separate compression of the first information and the second information.

58. The method according to claim 49, wherein the transmitting, by the third device, the first information and/or the second information comprises:
transmitting, by the third device, the first information and/or the second information to the first device and/or the second device.

59. The method according to claim 49, further comprising:
transmitting, by the third device, a parameter of the first model and/or the second model, and/or, a model identifier associated with the first model and/or the second model to the first device and/or the second device.

60. The method according to claim 49, further comprising:
receiving, by the third device, a channel measurement report.

61. The method according to claim 49, further comprising:
transmitting, by the third device, sixth information, wherein the sixth information is used to indicate that the one or more model identifiers are invalid.

62. The method according to claim 59 or 61, wherein the model identifier comprises at least one of the following:
an index associated with a parameter indicated by the fourth information; and
an index associated with the first information and/or the second information.

63. The method according to any one of claims 49 to 62, wherein
the first information comprises data and/or a label used to represent input of the second model on the first device side or the first model on the second device side;
and/or,
the second information comprises data and/or a label used to represent output of the second model on the first device side or the first model on the second device side.

64. The method according to any one of claims 49 to 63, wherein
the third device is a network node for model calculation, the first device is a terminal, and the second device is a base station;
or,
the third device is a network node for model calculation, the first device is a base station, and the second device is a terminal.

65. A model updating apparatus, comprising:
a first transmitting module, configured to transmit first information and/or second information to a second device, wherein the first information and/or the second information is used to update a first model on the second device side and/or update a second model on a first device side; and
a first receiving module, configured to receive third information from the second device, wherein the third information is used to indicate that the first model is successfully updated or the first model fails to be updated.

66. A model updating apparatus, comprising:
a fourth receiving module, configured to receive first information and/or second information, wherein the first information and/or the second information is used to update a first model on a second device side and/or update a second model on a first device side; and
a sixth transmitting module, configured to transmit third information, wherein the third information is used to indicate that the first model is successfully updated or the first model fails to be updated.

67. A model updating apparatus, comprising:
an eighth receiving module, configured to receive fourth information, wherein the fourth information comprises one or more parameters used to generate first information and/or second information; and
an eighth transmitting module, configured to transmit the first information and/or the second information, wherein the first information and/or the second information is used to update a first model on a second device side and/or update a second model on a first device side.

68. A communication device, comprising a processor, a memory, and a program or instruction stored in the memory and executable on the processor, wherein the steps of the method according to any one of claims 1 to 64 are implemented when the program or the instruction is executed by the processor.

69. A readable storage medium, having a program or instructions stored therein, wherein the steps of the method according to any one of claims 1 to 64 are implemented when the program or the instruction is executed by a processor.
